# EUROPÄISCHE PATENTSCHRIFT

(11) **EP 4 230 882 B1**
(45) Veröffentlichungstag und Bekanntmachung des Hinweises auf die Patenterteilung: **04.06.2025**
(21) Anmeldenummer: 23000019.2
(22) Anmeldetag: 07.02.2023
(51) Int. Cl.: F16B 12/12, F16B 5/00

(54) **FLÄCHIGE HOLZKONSTRUKTION MIT EINER GRATLEISTEN-VORRICHTUNG**
A FLAT WOODEN CONSTRUCTION COMPRISING A FLASH STRIP DEVICE
CONSTRUCTION EN BOIS PLAT COMPRENANT UN DISPOSITIF DE BARRE D'ÉBAVURAGE

(30) Priorität: 18.02.2022 CH 1652022
(43) Veröffentlichungstag der Anmeldung: 23.08.2023
(73) Patentinhaber: Sutter, Thomas, 9050 Appenzell (CH)
(72) Erfinder: Sutter, Thomas, 9050 Appenzell (CH)
(74) Vertreter: Römpler, Aldo

(56) Entgegenhaltungen:
- EP-A1- 3 078 864
- EP-B1- 2 641 503
- WO-A1-95/25898
- DE-A1- 1 759 662
- DE-A1- 10 201 565
- DE-A1- 102009 050 698

## Beschreibung

Die vorliegende Erfindung betrifft eine Gratleisten-Vorrichtung, aufweisend zwei in einer Gratnut anzuordnende Gratleistenhälften. Weiter bezieht sich die Erfindung auf eine flächige Holzkonstruktion mit dieser Gratleisten-Vorrichtung.

Flächige Holzkonstruktionen, wie beispielsweise Tischplatten, Regalbretter und Möbelfronten, aber auch Wand- oder Deckenelemente und dergleichen werden durch Temperatur- oder Feuchtigkeitseinwirkung verformt. Das heisst, es kommt zu einem Werfen oder Verziehen. Um diesen unerwünschten Effekten entgegenzuwirken, werden Gratleisten eingesetzt, vornehmlich quer zur Richtung der Holzfasern. Diese werden an der unsichtbaren Seite der flächigen Holzkonstruktion, etwa an der Unterseite einer Tischplatte, in eine schwalbenschwanzförmige Gratnut eingeschoben. Eine schwalbenschwanzförmige Gratnut weist geneigte, sprich diagonal zur Fläche der Holzkonstruktion ausgerichtete Gratnutwände auf, derart, dass sich die Gratnut von der Nutöffnung zum Gratnutboden hin verbreitert.

Bekannt sind auch zweiteilige Gratleisten, mit zwei symmetrischen Gratleistenhälften, die durch ein drittes Bauteil keilartig gespreizt werden. Dieses dritte Bauteil kann auch nur eine zwischen die beiden Gratleistenhälften eingetriebene Schraube sein. Der Nachteil von solchen mehrteiligen, in einer schwalbenschwanzförmigen Nut angeordneten Gratleistensystemen liegt darin, dass sie zwar einerseits einem Werfen oder Verziehen entgegenwirken, andererseits aber in Richtung der Gratnutwände und damit der flächigen Holzkonstruktion beträchtliche Kräfte entwickeln, die ihrerseits zu unerwünschten Spannungen in dieser flächigen Holzkonstruktion führen. Dabei ergibt sich auch ein Druck, der das Gratleistensystem in Richtung der Gratnutöffnung treibt. Ein spreizbares Verbindungselement ist zwar aus WO 95/25898 bekannt, dieses ist jedoch zum Einsatz als Grathalteleiste ungeeignet.

Auf der Grundlage dieser Erkenntnisse setzt sich die Erfindung die Aufgabe, **eine flächige Holzkonstruktion zu schaffen, mit einer** Gratleisten-Vorrichtung, aufweisend zwei in einer Gratnut anzuordnende Gratleistenhälften, die einerseits die Vorteile einer mehrteiligen Gratleiste aufweist, ohne dass sich die damit einhergehenden Nachteile ergeben und die einfach in der Montage ist.

Die erfindungsgemässe, **eine Gratleisten-Vorrichtung aufweisende flächige Holzkonstruktion,** entspricht den kennzeichnenden Merkmalen des Patentanspruchs 1. Weitere vorteilhafte Ausbildungen des Erfindungsgedankens sind aus den abhängigen Patentansprüchen ersichtlich.

Die erfindungsgemässe, **eine** Gratleisten-Vorrichtung **aufweisende flächige Holzkonstruktion,** führt zu keinen unerwünschten Spannungen in der flächigen Holzkonstruktion. **Die Gratleisten-Vorrichtung** ist sehr einfach in der Montage und fällt optisch nicht störend auf, da deren an der Fläche der Holzkonstruktion sichtbar bleibenden Teile eine saubere Fläche ergeben, ohne dass Montagemittel zu sehen sind, wie Schrauben oder dergleichen. Allenfalls kann das mittlere Sperrelement gegenüber der Fläche der Holzkonstruktion oder gegenüber der sichtbaren, äusseren Endflächen der seitlichen Teile vertieft oder erhaben angeordnet werden, so dass sich optisch eine sich von den übrigen Flächen vertiefte Nut oder ein abhebender Grat ergibt. Das bedeutet, dass diese Gratleiste allenfalls auch an der sichtbaren Seite von Wand- oder Deckenelementen und dergleichen angeordnet werden könnte und dort eventuell sogar deren Befestigung an der Unterkonstruktion der Wand oder Decke kaschieren könnte,

Nachfolgend werden bevorzugte Ausführungsbeispiele der Erfindung anhand der Zeichnung näher beschrieben.
- Fig. 1: zeigt ein Beispiel einer in einer flächigen Holzkonstruktion angeordneten Gratleisten-Vorrichtung im Schnitt;
- Fig. 2: zeigt eine Ansicht derselben Gratleisten-Vorrichtung.

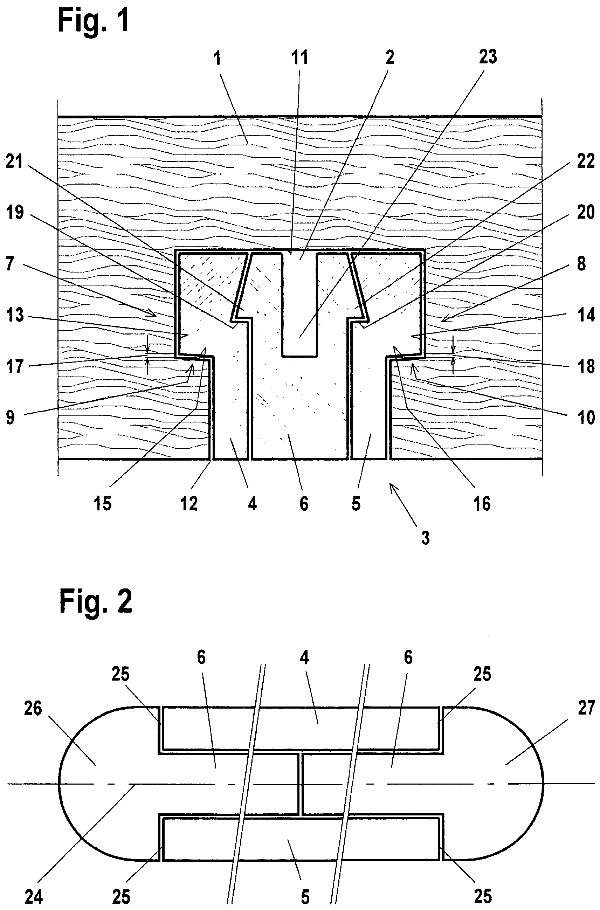

In einer flächigen Holzkonstruktion 1 ist gemäss Fig. 1 eine Gratnut 2 eingebracht. In dieser ist die Gratleisten-Vorrichtung 3 anzuordnen. Diese Gratleisten-Vorrichtung 3 ist mehrteilig, sie weist eine erste Gratleistenhälfte 4 und eine zweite Gratleistenhälfte 5 auf. Zwischen diesen beiden Gratleistenhälften 4 und 5 ist ein Sperrelement 6 einzusetzen. Die zwei Gratleistenhälften 4 und 5 können aus Metall bestehen, zum Beispiel aus Edelstahl.

Das Sperrelement 6 ist in der bevorzugten Ausführung des vorliegenden Ausführungsbeispiels aus einem elastischen oder gummielastischen Werkstoff gefertigt, beispielsweise Kunststoff, wie Polyurethan oder dergleichen. Nicht ausgeschlossen ist aber auch ein mehrteiliges Sperrelement 6, das aus Teilen unterschiedlicher Elastizität oder aus elastischen und nicht elastischen Teilen besteht. Letzteres kann beispielsweise auch einstückig durch Coextrusion von Kunststoffen mit unterschiedlichen Eigenschaften erfolgen.

Die voneinander abzuwendenden Seiten 7 und 8 dieser beiden Gratleistenhälften 4 und 5 sind abgestuft ausgebildet, das heisst, sie weisen doppelte Abwinklungen 9 und 10 auf. Die beiden Gratleistenhälften 4 und 5 sind dabei in der vorliegenden Ausführung so auszurichten, dass deren zum Gratnutboden 11 hin ragende Bereich im Querschnitt breiter ist, als deren sich zur Gratnutöffnung 12 hin erstreckende Bereich. Die dadurch gebildeten Aussenwände 13 und 14 verlaufen annähernd parallel zueinander. Die jeweils durch die doppelten Abwinklungen 9 und 10 gebildeten Absätze 15 und 16 halten die beiden Gratleistenhälften 4 und 5 nicht nur in der Gratnut 2 gefangen, sondern sie fangen auch die in Richtung der Gratnutöffnung 12 treibenden Kräfte ab. Unerwünschte Spannungen zu den beiden Seiten hin, das heisst, in die flächige Holzkonstruktion 1, werden vermieden.

Die Absätze 15 und 16 sind in der vorliegenden, bevorzugten Ausführung nicht rechtwinklig ausgeführt, sondern weisen jeweils eine Neigung 17 und 18 auf. Die Neigung 17 und 18 ist dabei so ausgebildet, dass das jeweils äussere Ende der beiden Absätze 15 und 16, das zu den Seiten 7 und 8 der beiden Gratleistenhälften 4 und 5 ausgerichtet ist, näher beim Gratnutboden 11 ist, während das innere Ende näher zur Gratnutöffnung 12 liegt. Das heisst, es ergibt sich eine Steigung in Richtung des in die Gratnut 2 einzusteckenden Endes der Gratleistenhälften 4 und 5. Die besagte Neigung 17 und 18 kann beispielsweise bis zu 15° betragen. Diese Formgebung erleichtert bei der Montage das Einfügen der beiden Gratleistenhälften 4 und 5 in der entsprechend geformten, zum Gratnutboden 11 hin im Querschnitt breiteren Gratnut 2.

Die beiden Gratleistenhälften 4 und 5 sowie das Sperrelement 6 sind durch mindestens eine Rastverbindung miteinander verbunden. Das Sperrelement 6 weist hierzu in der vorliegenden Ausführung zu beiden Seiten, das heisst, zu den benachbarten Gratleistenhälften 4 und 5 hin, mindestens je eine Einrastung 19 und 20 auf. Diese bilden zusammen mit mindestens je einer Rastnase 21 und 22 der Gratleistenhälften 4 und 5 die besagte Rastverbindung. Es versteht sich von selbst, dass diese Rastverbindung auch umgekehrt ausgeführt sein könnte, das heisst, die Einrastungen am Sperrelement 6 und die Rastnasen an den Gratleistenhälften 4 und 5. Es könnte auch eine Mehrzahl von Rastverbindungen vorhanden sein. Um das Sperrelement beim Einschieben zusammendrücken zu können, kann in dieses vom einzuschiebenden Ende her mindestens ein Spalt 23 vorhanden sein.

Gemäss der Ansicht nach Fig. 2 kann das Sperrelement 6 bezüglich seiner Länge, also in seiner Längsachse 24 betrachtet, geteilt ausgeführt sein. Im vorliegenden Ausführungsbeispiel ist das Sperrelement 6 zweigeteilt. Theoretisch könnte dies auch für die Gratleistenhälften 4 und 5 der Fall sein. Die beiden Enden des Sperrelements 6, in der Längsachse 24 gesehen, können abgerundet sein und die jeweiligen Endkanten 25 der Gratleistenhälften 4 und 5 umgreifen, so dass in diesem Bereich je eine Schutzkappe 26 und 27 gebildet ist. Es sei hier festgehalten, dass diese Schutzkappe 26 und 27 auch als gegenüber dem Sperrelement 6 separate Bauteile ausgebildet sein könnten und nicht zwingend eine im Querschnitt halbkreisförmige Endfläche aufweisen müssen. Das ergibt in jedem Fall nicht nur einen saubereren Abschluss, sondern kann auch vor Verletzungen schützen, beispielsweise wenn unter einen Tisch oder ein Regalbrett gegriffen wird. Zudem erlauben die beiden Schutzkappen 26 und 27, da sie aus einem elastischen, beziehungsweise gummielastischen Werkstoff bestehen, Bewegungen der flächigen Holzkonstruktion 1 in Richtung der Längsachse 24 gegenüber den Endkanten 25 der Gratleistenhälften 4 und 5, die aus einem starren Werkstoff bestehen, zum Beispiel aus Metall, beziehungsweise Edelstahl.

Die relativ einfache Montage der Gratleiste erfolgt wie folgt: Erstens, Einfräsen der Gratnut 2. Zweitens, Einsetzen der Gratleistenhälften 4 und 5. Drittens, Einstecken des Sperrelements 6.

Das zeichnerisch dargestellte Ausführungsbeispiel bietet eine optimale und sehr einfach zu bedienende Lösung. Selbstverständlich liegt es aber im Rahmen der Erfindung nach **Patentanspruch 1** die Gratleiste sowie deren Bauteile auch anders als gezeichnet auszubilden. Theoretisch wären auch Gratleistenhälften 4 und 5 denkbar, die mehrfach abgestuft ausgebildet sind. Die Gratnut 2 müsste dann ebenfalls eine entsprechende Geometrie aufweisen. Nicht zuletzt könnte die Geometrie der Gratnut 2 auch bezüglich des Gratnutbodens 11 anders ausgeführt sein, beispielsweise indem die Gratnut 2 tiefer in die flächige Holzkonstruktion 1 hineinragt, als die Gratleistenhälften 4 und 5 oder im Bereich dieser Gratleistenhälften 4 und 5 tiefer hineinragen, als im Bereich des Sperrelements 6.

### Bezugszeichenverzeichnis:

- 1: Flächige Holzkonstruktion
- 2: Gratnut
- 3: Gratleisten-Vorrichtung
- 4: Erste Gratleistenhälfte
- 5: Zweite Gratleistenhälfte
- 6: Sperrelement
- 7: Seite der ersten Gratleistenhälften 4
- 8: Seite der zweiten Gratleistenhälften 5
- 9: Abwinklung der ersten Gratleistenhälfte 4
- 10: Abwinklung der zweiten Gratleistenhälfte 5
- 11: Gratnutboden
- 12: Gratnutöffnung
- 13: Aussenwand der ersten Gratleistenhälfte 4
- 14: Aussenwand der zweiten Gratleistenhälfte 5
- 15: Absatz der ersten Gratleistenhälfte 4
- 16: Absatz der zweiten Gratleistenhälfte 5
- 17: Neigung des Absatzes der ersten Gratleistenhälfte 4
- 18: Neigung des Absatzes der zweiten Gratleistenhälfte 5
- 19: Einrastung der ersten Gratleistenhälfte 4
- 20: Einrastung der zweiten Gratleistenhälfte 5
- 21: Erste Rastnase des Sperrelements 6
- 22: Zweite Rastnase des Sperrelements 6
- 23: Spalt des Sperrelements 6
- 24: Längsachse des Sperrelements 6
- 25: Endkanten der Gratleistenhälften 4 und 5
- 26: Erste Schutzkappe des Sperrelements 6
- 27: Zweite Schutzkappe des Sperrelements 6

## Patentansprüche

1. Flächige Holzkonstruktion (1) mit einer Gratleisten-Vorrichtung (3), die zwei separate Gratleistenhälften (4, 5) aufweist, wobei in eine Fläche dieser flächigen Holzkonstruktion (1) eine Gratnut (2) eingebracht ist, die derart abgestuft ausgebildet ist, dass mindestens ein Bereich gebildet ist, der im Querschnitt breiter ist, als ein zu einer Gratnutöffnung (12) hin liegender Bereich, wobei die in dieser Gratnut (2) voneinander abzuwendenden Seiten dieser beiden Gratleistenhälften (4, 5) durch mindestens zwei Abwinklungen (9, 10) ebenfalls abgestuft (15, 16) ausgebildet sind, wobei mindestens ein Bereich gebildet ist, der im Querschnitt breiter ist, als ein zu einer Gratnutöffnung (12) zu richtender Bereich und wobei zwischen den zwei Gratleistenhälften (4, 5) ein Sperrelement (6) vorhanden ist, das mindestens teilweise aus einem elastischen Werkstoff besteht und wobei durch die jeweilige Abwinklung (9, 10) der beiden Gratleistenhälften (4, 5) je ein Absatz (15, 16) gebildet ist und vor und/oder nach den Absätzen (15, 16) liegende Aussenwände (13, 14) der beiden Gratleistenhälften (4, 5) im Wesentlichen parallel zueinander verlaufen und wobei die beiden Gratleistenhälften (4, 5) und das Sperrelement (6) durch mindestens eine Rastverbindung miteinander verbunden sind, wobei die Rastverbindung eine Einrastung (19, 20) aufweist, und je Einrastung (19, 20) eine Rastnase (21, 22) vorhanden ist.

2. Flächige Holzkonstruktion (1) nach Anspruch 1, **dadurch gekennzeichnet, dass** das mindestens eine Sperrelement (6) der Gratleisten-Vorrichtung (3) mindestens teilweise aus einem gummielastischen Werkstoff besteht.

3. Flächige Holzkonstruktion (1) nach Anspruch 2, **dadurch gekennzeichnet, dass** das mindestens eine Sperrelement (6) der Gratleisten-Vorrichtung (3) mindestens teilweise aus einem Kunststoff, beispielsweise Polyurethan besteht.

4. Flächige Holzkonstruktion (1) nach einem der Ansprüche 1 - 3, **dadurch gekennzeichnet, dass** die beiden besagten Absätze (15, 16) der Gratleisten-Vorrichtung (3) jeweils eine Neigung (17, 18) aufweisen, wobei sich je eine Steigung in Richtung des in die Gratnut (2) einzuschiebenden Endes der Gratleistenhälften (4, 5) ergibt, mit dem Zweck, deren Einfügen in die entsprechend geformte Gratnut (2) zu erleichtern.

5. Flächige Holzkonstruktion (1) nach Anspruch 4, **dadurch gekennzeichnet, dass** die besagte Neigung (17, 18) je bis zu 15° beträgt.

6. Flächige Holzkonstruktion (1) nach einem der Ansprüche 1 - 5, **dadurch gekennzeichnet, dass** im mindestens einen Sperrelement (6) der Gratleisten-Vorrichtung (3) von einem in die Gratnut (2) einzuschiebenden Ende her mindestens ein Spalt (23) vorhanden ist, mit dem Zweck, das mindestens eine Sperrelement (6) beim Einschieben zusammendrücken zu können.

7. Flächige Holzkonstruktion (1) nach einem der Ansprüche 1 - 6, **dadurch gekennzeichnet, dass** die jeweiligen Endkanten (25) der Gratleistenhälften (4, 5) der Gratleisten-Vorrichtung (3), in einer Längsachse (24) gesehen, durch mindestens eine Schutzkappe (26, 27) abgedeckt sind.

8. Flächige Holzkonstruktion (1) nach Anspruch 7, **dadurch gekennzeichnet, dass** die Enden des Sperrelements (6), in einer Längsachse (24) gesehen, derart verbreitert sind, dass sie die jeweiligen Endkanten (25) der Gratleistenhälften (4, 5) umgreifen, so dass in diesem Bereich je eine Schutzkappe (26, 27) gebildet ist.

## Claims

1. Flat wooden construction (1) with a burr strip device (3), which has two separate burr strip halves (4, 5), wherein a burr strip groove (2), which is designed to be stepped in such a way that at least one area is formed which is broader in cross section than an area lying in the direction toward a burr strip groove opening (12), is introduced into a surface of this flat wooden construction (1), wherein the sides of these two burr strip halves (4, 5) facing away from one another in this burr strip groove (2) are likewise designed as stepped (15, 16) by at least two angled portions (9, 10), wherein at least one area is formed which is broader in cross section than an area facing toward a burr strip groove opening (12), and wherein a locking element (6), which consists at least partially of an elastic material, is present between the two burr strip halves (4, 5), and wherein a respective shoulder (15, 16) is formed by the respective angled portions (9, 10) of the two burr strip halves (4, 5), and outer walls (13, 14) of the two burr strip halves (4, 5) lying upstream and/or downstream of the shoulders (15, 16) run substantially parallel to one another, and wherein the two burr strip halves (4, 5) and the locking element (6) are connected to one another by at least one latching connection, wherein the latching connection has a detent (19, 20), and a detent lug (21, 22) is present for each detent (19, 20).

2. Flat wooden construction (1) according to claim 1, **characterized in that** the at least one locking element (6) of the burr strip device (3) consists at least partially of a rubber elastic material.

3. Flat wooden construction (1) according to claim 2, **characterized in that** the at least one locking element (6) of the burr strip device (3) consists at least partially of a plastic, for example, polyurethane.

4. Flat wooden construction (1) according to one of claims 1 - 3, **characterized in that** the two said shoulders (15, 16) of the burr strip device (3) respectively have an inclination (17, 18), wherein a respective slope results in the direction of the end of the burr strip halves (4, 5) to be inserted into the burr strip groove (2) with the purpose of facilitating their insertion into the correspondingly shaped burr strip groove (2).

5. Flat wooden construction (1) according to claim 4, **characterized in that** said respective inclination (17, 18) mounts to up to 15°.

6. Flat wooden construction (1) according to one of claims 1 - 5, **characterized in that**, in at least one locking element (6) of the burr strip device (3), at least one gap (23) is present starting at an end to be inserted into the burr strip groove (2), with the purpose that the at least one locking element (6) can compress together during the insertion.

7. Flat wooden construction (1) according to one of claims 1 - 6, **characterized in that** the respective end edges (25) of the burr strip halves (4, 5) of the burr strip device (3) are covered by at least one protective cap (26, 27), when viewed in a longitudinal axis (24).

8. Flat wooden construction (1) according to claim 7, **characterized in that**, when viewed in a longitudinal axis (24), the ends of the locking element (6) are broadened in such a way that they surround the respective end edges (25) of the burr strip halves (4, 5), such that a respective protective cap (26, 27) is formed in this area.

## Revendications

1. Structure en bois (1) plane, pourvue d'un dispositif (3) de profilé d'arête, qui comporte deux moitiés (4, 5) de profilé d'arête séparées, dans une surface de ladite structure en bois (1) plané étant ménagée une rainure (2) en queue d'aronde, qui est conçue sous forme échelonnée de manière à constituer au moins une zone dont la section transversale est plus large qu'une zone située en direction d'une ouverture (12) de rainure en queue d'aronde,
les faces desdites deux moitiés (4, 5) de profilé d'arête qui doivent être détournées l'une de l'autre dans ladite rainure (2) en queue d'aronde étant également conçues sous forme échelonnée (15, 16) par au moins deux coudes (9, 10), au moins une zone étant constituée, dont la section transversale est plus large qu'une zone qui doit être dirigée vers une ouverture (12) de rainure en queue d'aronde et entre les deux moitiés (4, 5) de profilé d'arête étant présent un élément de blocage (6) qui consiste au moins partiellement en une matière élastique et par les coudes (9, 10) respectifs des deux moitiés (4, 5) de profilé d'arête étant constitué chaque fois un talon (15, 16) et des parois extérieures (13, 14) de deux moitiés (4, 5) de profilé d'arête situées à l'avant et / ou à l'arrière des talons (15, 16) s'écoulant sensiblement à la parallèle l'une de l'autre et les deux moitiés (4, 5) de profilé d'arête et l'élément de blocage (6) étant assemblés entre eux par un assemblage par enclenchement, l'assemblage par enclenchement comportant un encliquetage (19, 20) et pour chaque encliquetage (19, 20) étant présent un ergot d'enclenchement (21, 22).

2. Structure en bois (1) plane selon la revendication 1, **caractérisée en ce que** l'au moins un élément de blocage (6) du dispositif (3) de profilé d'arête consiste au moins en partie en une matière caoutchouteuse élastique.

3. Structure en bois (1) plane selon la revendication 2, **caractérisée en ce que** l'au moins un élément de blocage (6) du dispositif (3) de profilé d'arête consiste au moins en partie en une matière plastique, par exemple en polyuréthane.

4. Structure en bois (1) plane selon l'une quelconque des revendications 1 à 3, **caractérisée en ce que** les deux talons (15, 16) cités du dispositif (3) de profilé d'arête comportent chacun une inclinaison (17, 18), chaque fois une pente résultant dans la direction de l'extrémité des moitiés (4, 5) de profilé d'arête qui doit être emboîtée dans la rainure (2) en queue d'aronde, avec pour but de faciliter son insertion dans la rainure (2) en queue d'aronde façonnée en conséquence.

5. Structure en bois (1) plane selon la revendication 4, **caractérisée en ce que** l'inclinaison (17, 18) citée est chacune de jusqu'à 15 °.

6. Structure en bois (1) plane selon l'une quelconque des revendications 1 à 5, **caractérisée en ce que** dans l'au moins un élément de blocage (6) du dispositif (3) de profilé d'arête, à partir d'une extrémité qui doit être emboîtée dans la rainure (2) en queue d'aronde est présente au moins une fente (23), avec pour but de pouvoir comprimer au moins un élément de blocage (6) lors de l'emboîtage.

7. Structure en bois (1) plane selon l'une quelconque des revendications 1 à 6, **caractérisée en ce que**, considérés dans un axe longitudinal (24), les bords d'extrémité (25) respectifs des moitiés (4, 5) de profilé d'arête du dispositif (3) de profilé d'arête sont recouverts d'au moins un capuchon protecteur (26, 27).

8. Structure en bois (1) plane selon la revendication 7, **caractérisée en ce que**, considérées dans un axe longitudinal (24), les extrémités de l'élément de blocage (6) sont élargies de sorte à entourer les bords d'extrémité (25) respectifs des moitiés (4, 5) de profilé d'arête, de manière à ce que dans cette zone soit constitué chaque fois un capuchon protecteur (26, 27).
